# EUROPEAN PATENT SPECIFICATION

(11) **EP 2 677 377 B1**
(45) Date of publication and mention of the grant of the patent: **01.03.2017**
(21) Application number: 11822790.9
(22) Date of filing: 31.01.2011
(51) Int. Cl.: G05B 19/05, B25J 19/06, G05B 9/02, G05B 15/02, G06F 9/48, G06F 9/50, G05B 19/042

(54) **SAFETY CONTROL DEVICE AND SAFETY CONTROL METHOD**
SICHERHEITSSTEUERUNGSVORRICHTUNG UND SICHERHEITSSTEUERUNGSVERFAHREN
DISPOSITIF DE COMMANDE DE SÉCURITÉ ET PROCÉDÉ DE COMMANDE DE SÉCURITÉ

(43) Date of publication of application: 25.12.2013
(73) Proprietor: TOYOTA JIDOSHA KABUSHIKI KAISHA, Toyota-shi, Aichi-ken, 471-8571 (JP)
(72) Inventor: TAIRA, Tetsuya, Toyota-shi Aichi 471-8571 (JP); BITOH, Hiroshi, Toyota-shi Aichi 471-8571 (JP)
(74) Representative: D Young & Co LLP
(86) International application number: PCT/JP2011/000524
(87) International publication number: WO 2012/104896

(56) References cited:
- EP-A1- 1 548 592
- JP-A- 7 295 840
- JP-A- 2006 338 426
- JP-A- 2009 251 663
- JP-A- 2010 271 759
- US-A1- 2009 210 879
- US-B2- 7 302 685

## Description

### Technical Field

The present invention relates to a safety controller mounted in a service robot, transportation equipment, and the like to ensure functional safety, and particularly to a safety controller using a computer system.

### Background Art

Service robots are required to ensure functional safety by constantly monitoring a safety state using an external sensor and a self-diagnosis device and by executing appropriate safety control logic upon detecting some risk.

IEC 61508 has been established as an international standard for functional safety of the service robots described above as well as systems which operate on an electrical principle, such as transportation equipment. In IEC 61508, a system provided to ensure functional safety is called a safety-related system. IEC 61508 defines various techniques for constructing the safety-related system using hardware, such as a microprocessor and a PLC (Programmable Logic Controller), and a computer program (software). The use of techniques defined in IEC 61508 makes it possible to construct the safety-related system using a computer system

Meanwhile, in recent years, the throughput of programmable electronic devices, such as a microprocessor, has been improved. Accordingly, various application programs are executed in parallel on a computer system by using a multitask OS (Operating System), thereby enabling integration of computer systems which are mounted in equipment, such as a service robot and a vehicle, for various purposes.

Patent Literature 1, for example, discloses a technique for causing an application program related to ensuring of functional safety, (hereinafter, referred to as "safety-related application") to run on a computer system together with another application program (hereinafter, referred to as "non-safety-related application").

When the techniques defined in IEC 61508 are applied to the entire software including the safety-related application and the non-safety-related application, a need arises to apply the techniques also to the non-safety-related application. This causes a problem of an increase in software development cost.

Thus, in the technique disclosed in Patent Literature 1, safety-related applications (a safety monitoring program and a safety control program) are made independent from a non-safety-related application (a normal control program) by time partitioning of a system program. Accordingly, the normal control program can be excluded from the safety-related system, which contributes to a reduction in cost of the safety-related system constructed using a computer system.

### Citation List

### Patent Literature

[Patent Literature 1] Japanese Unexamined Patent Application Publication No. 2010-271759

US 7 302 685 B2 relates to methods and apparatus for sharing slack in a time-partitioned system.

### Summary of Invention

### Technical Problem

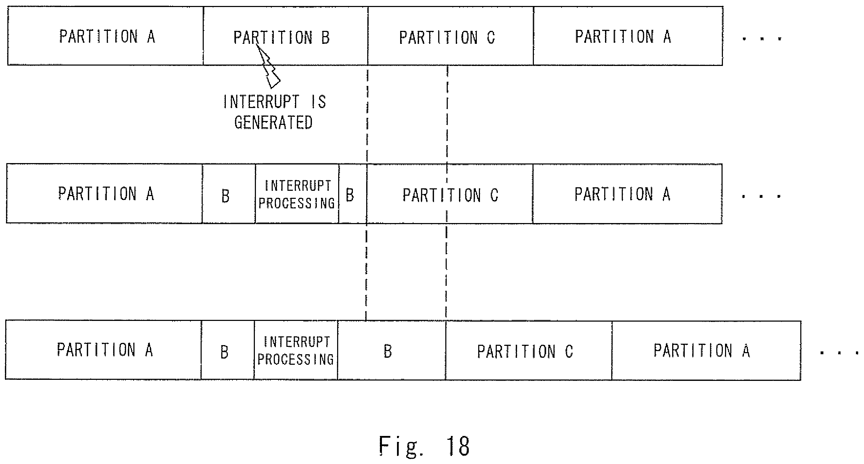

However, when interrupt processing is applied to the system program employing time partitioning as disclosed in Patent Literature 1, there is a problem of causing a failure of processing. Hereinafter, the problem will be described with reference to Fig. 18. In the figure, time partitions are respectively expressed as "partition A", "partition B", and "partition C". Further, the upper figure of Fig. 18 shows an example where the time partitions are repeatedly switched in the order of the partition A, the partition B, and the partition C.

Here, consider a case where an interrupt is generated in the partition B in the case where the time partitions are switched as illustrated in the upper figure of Fig 18. The central figure of Fig. 18 illustrates a case where interrupt processing is executed promptly in response to the interrupt in the case illustrated in the upper figure of Fig. 18. In this case, as shown in the central figure of Fig. 18, a period in which the interrupt processing is executed occurs in the partition B This interrupt processing is executed by consuming a time resource of the partition B. Accordingly, a time resource necessary for executing the processing in the partition B is not guaranteed, and there is a possibility that the processing in the partition B is not completed and finished in an uncompleted state. At this time, when processing based on the premise that the processing in the partition B is completed is executed in processing in the partition C and subsequent partitions, there poses a problem that the processing in the partition C and subsequent partitions cannot be normally executed

Meanwhile, the lower figure of Fig 18 illustrates a case where the period of the partition B is extended so as to guarantee the completion of the processing in the partition B when the interrupt processing is executed in the case illustrated in the upper figure of Fig. 18. In this case, the time resource necessary for executing the processing in the partition B is guaranteed, but the timing for executing the processing in the partition C and subsequent partitions is delayed. As a result, when the processing in the partition C and subsequent partitions includes processing requiring periodic execution, there poses a problem that the processing cannot be periodically executed

For example, when processing of updating a command value for an actuator of a control target requires periodic execution, the command value cannot be updated at a desired timing. This results in a problem that a failure occurs in the control of the actuator Further, for example, in a case where processing of accessing a reset circuit for resetting the system when there is no access from the system in a predetermined period so as to monitor hang-up of the system requires periodic execution, the reset circuit cannot be accessed at a desired timing. As a result, even when the system has no problem, there poses a problem that the reset circuit resets the system.

Thus, when the interrupt processing is applied to the system program employing time partitioning, there is a problem that a failure of processing occurs Meanwhile, in general, the interrupt processing has such an aspect that processing desired to be executed as soon as possible upon generation of an interrupt is implemented.

The present invention has been made based on the above findings, and has an object to provide a safety controller and a safety control method which are capable of preventing a failure of processing while suppressing execution delay of interrupt processing even when the interrupt processing is executed in time partitioning.

### Solution to Problem

A safety controller according to a first aspect of the present invention includes: a processor; a system program for controlling allocation of an execution time of the processor to a safety-related task for executing processing related to ensuring of functional safety of a control target, a non-safety-related task for executing other processing related to control of the control target, and an interrupt processing task for executing processing in response to an interrupt from the control target; and an interrupt handler executed in response to the interrupt from the control target. The processor executes the system program to schedule the tasks in accordance with scheduling information indicating scheduling contents of a safety-related time partition in which the execution time is allocated to the safety-related task, a non-safety-related time partition in which the execution time is allocated to the non-safety-related task, and a reservation execution time partition in which the execution time is allocated to an execution reserved task which is reserved to be executed. Upon generation of an interrupt from the control target, the processor executes the interrupt handler to reserve execution of the interrupt processing task for executing processing in response to the interrupt, as the execution reserved task. In the scheduling, when execution of a task in which the execution time is allocated to a time partition prior to the reservation execution time partition is finished before the period of the previous time partition has expired, the processor allocates the execution time in the previous time partition to any of the execution reserved tasks, in place of the execution time in the reservation execution partition.

A safety control method according to a second aspect of the present invention includes the steps of: reserving, upon generation of an interrupt from a control target, execution of an interrupt processing task for executing processing in response to the interrupt, as an execution reserved task; and scheduling tasks in accordance with scheduling information indicating scheduling contents of a safety-related time partition in which an execution time of a processor is allocated to a safety-related task for executing processing related to ensuring of functional safety of the control target, a non-safety-related time partition in which the execution time is allocated to a non-safety-related task for executing other processing related to control of the control target, and a reservation execution time partition in which the execution time is allocated to an execution reserved task which is reserved to be executed. In the step of scheduling, when execution of a task in which the execution time is allocated to a time partition prior to the reservation execution time partition is finished before the period of the previous time partition has expired, the execution time in the previous time partition is allocated to any of the execution reserved tasks, in place of the execution time in the reservation execution partition.

### Advantageous Effects of Invention

According to the above aspects of the present invention, it is possible to provide a safety controller and a safety control method which are capable of preventing a failure of processing while suppressing execution delay of interrupt processing even when the interrupt processing is executed in time partitioning.

### Brief Description of Drawings

Fig 1 is a block diagram showing a configuration example of a safety controller;
Fig. 2 is a diagram for explaining the concept of time partitioning;
Fig. 3 is a conceptual diagram for explaining the concept of resource partitioning;
Fig. 4 is a diagram showing relationships between a partition scheduler and tasks which are activated in an execution environment provided by an OS shown in Fig. 1;
Fig. 5A is a diagram showing a specific example of a scheduling pattern;
Fig. 5B is a diagram showing a specific example of the scheduling pattern;
Fig. 6 is a flowchart showing a specific example of a procedure of the partition scheduler;
Fig 7 is a flowchart showing a specific example of a reset procedure of a microcontroller;
Fig. 8 is a flowchart showing a specific example of the reset procedure of the microcontroller;
Fig 9 is a block diagram showing a configuration example of a safety controller according to a first embodiment of the invention;
Fig. 10 is a diagram showing relationships between a partition scheduler, tasks, and an interrupt handler which are activated in an execution environment provided by an OS shown in Fig. 9;
Fig. 11 is a task state transition diagram;
Fig. 12 is a diagram showing a specific example of a scheduling pattern according to the first embodiment of the invention;
Fig. 13 is a conceptual diagram of a procedure upon generation of an interrupt according to the first embodiment of the invention;
Fig 14 is a flowchart showing a specific example of a procedure upon generation of an interrupt:
Fig 15 is a flowchart showing a specific example of a scheduling procedure according to the first embodiment of the invention;
Fig. 16 is a flowchart showing a specific example of a scheduling procedure according to a second embodiment of the invention;
Fig. 17 is a diagram for explaining WCWT; and
Fig. 18 is a diagram for explaining a problem

### Description of Embodiments

Exemplary embodiments of the present invention will be described in detail below with reference to the drawings. Throughout the drawings, the same components are denoted by the same reference numerals, and a repeated explanation thereof is omitted as needed for clarity of the explanation

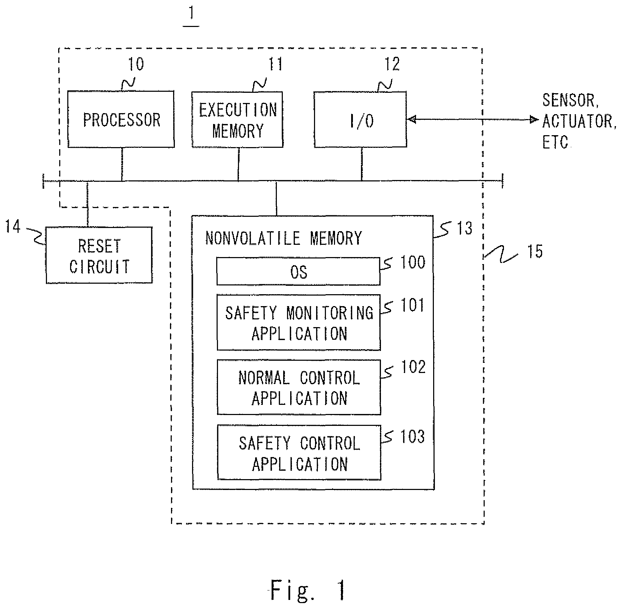

A safety controller 1 is mounted in a service robot, transportation equipment, or the like and executes safety control for ensuring functional safety. The safety controller 1 is adapted to execute a safety-related application and a non-safety-related application in one computer system Fig. 1 is a block diagram showing a configuration example of the safety controller 1.

A processor 10 fetches programs (instruction stream), decodes instructions, and carries out arithmetic processing according to the result of instruction decoding. Though only one processor 10 is illustrated in Fig. 1, the safety controller 1 may have a multiprocessor configuration including a plurality of processors 10. The processor 10 may be a multicore processor The processor 10 executes an operating system (OS) 100 as a system program to thereby provide a multiprogramming environment The multiprogramming environment means an environment in which a plurality of programs are assumed to be executed in parallel by periodically switching a plurality of programs to be executed or by switching programs to be executed upon generation of an event.

Multiprogramming is sometimes called a multiprocess, multithread, multitask, or the like Each of a process, a thread, and a task indicates a program unit to be executed in parallel in the multiprogramming environment The multiprogramming environment included in the processor 10 according to this example may be a multiprocess environment or a multithread environment.

An execution memory 11 is a memory used for the processor 10 to execute programs The execution memory 11 stores programs (an OS 100, applications 101 to 103, etc.), which are loaded from a nonvolatile memory 13, input and output data to and from the processor 10, and the like Note that the processor 10 may directly execute these programs from the nonvolatile memory 13 without loading the programs from the nonvolatile memory 13 into the execution memory 11.

Specifically, the execution memory 11 may be a randomly accessible volatile memory such as an SRAM (Static Random Access Memory) or a DRAM (Dynamic Random Access Memory). The execution memory 11 of Fig. 1 shows logical units That is, the execution memory 11 may be implemented as a combination of a plurality of SRAM devices, a combination of a plurality of DRAM devices, or a combination of an SRAM device and a DRAM device, for example.

An I/O port 12 is used for data transmission and reception to and from external devices. When the safety controller 1 is mounted in a service robot, for example, the external devices are a visual sensor capable of measuring obstacles around the service robot, an actuator for causing the service robot to operate, and the like

The nonvolatile memory 13 is a memory device capable of maintaining storage contents more stably than the execution memory 11 without being supplied with power. The nonvolatile memory 13 is, for example, a ROM (Read Only Memory), a flash memory, a hard disk drive, an optical disk drive, or a combination thereof. The nonvolatile memory 13 stores the OS 100 and the applications 101 to 103. Note that at least a part of the nonvolatile memory 13 may be configured to be removable from the safety controller 1 For example, the memory storing the applications 101 to 103 may be removably mounted. Alternatively, at least a part of the nonvolatile memory 13 may be disposed outside the safety controller 1.

The OS 100 is executed by the processor 10 so as to perform task management including task scheduling, interrupt management, time management, and resource management, and to provide a mechanism for inter-task synchronization and inter-task communication, for example, by using hardware resources such as the processor 10, the execution memory 11, and the nonvolatile memory 13.

In addition, the OS 100 has a function of protecting hardware resources temporally and spatially in order to increase the independence of the safety monitoring application 101 and the safety control application 103, which are related to ensuring of functional safety, from the normal control application 102. Here, the hardware resources include the processor 10, the execution memory 11, and the I/O port 12.

Out of these, temporal protection is performed by partitioning a temporal resource such as an execution time of the processor 10. Specifically, the temporal protection is performed by partitioning the execution time of the processor 10 and allocating a task (a process or a thread) to each partition (referred to as "time partition"). A scheduling function (partition scheduler 21) of the OS 100 provides a guarantee of use of resources, including the execution time of the processor 10, to the task allocated to each time partition (hereinafter, abbreviated as "TP" in some cases).

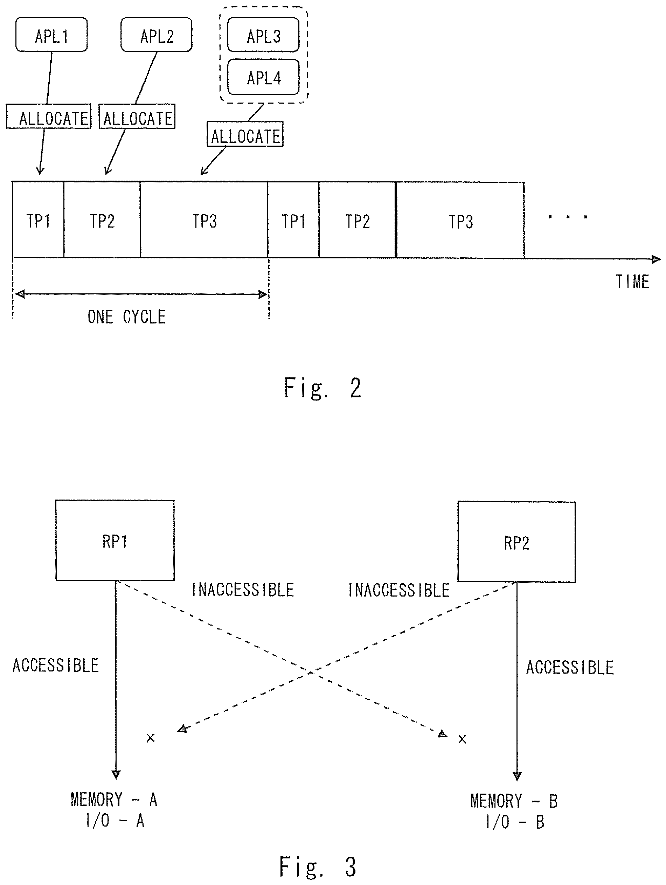

Fig 2 is a conceptual diagram relating to the time partitioning Fig. 2 shows an example in which a predetermined one-cycle time is divided into three time partitions of TP1, TP2, and TP3 Assuming that the one-cycle time is 100 ticks, the first 20 ticks are defined as TP1, the middle 30 ticks are defined as TP2, and the last 50 ticks are defined as TP3.

In the example shown in Fig. 2, a first application (APL1) to a fourth application (APL4) are allocated to any of TP1 to TP3. The scheduling function (partition scheduler 21) of the OS 100 selects and decides one of TP1 to TP3 to be activated according to a lapse of time. Then, the application allocated to the active TP is executed by the processor 10.

Meanwhile, spatial protection is performed by partitioning stationary resources, including the execution memory 11 and the I/O port 12, and by allocating a task to each partition (referred to as "resource partition") The scheduling function (partition scheduler 21) of the OS 100 inhibits the task from exceeding the resource partition preliminarily allocated (hereinafter, abbreviated as "RP" in some cases) and from accessing other resources.

Fig. 3 is a conceptual diagram relating to the resource partitioning. The example of Fig. 3 shows two RPs (RP1 and RP2). A part (A area) of each of the nonvolatile memory 13 and the execution memory 11 and a part (port A) of the I/O port 12 are allocated to RP1. Further, another part (B area) of each of the execution memory 11 and the nonvolatile memory 13 and another part (port B) of the I/O port 12 are allocated to RP2. Access from RP1 to the resources allocated to RP2 is inhibited, and access from RP2 to the resources allocated to RP1 is inhibited.

Note that there is no need to exclusively allocate all the resources to any one of RPs. That is, the resources may be shared by a plurality of RPs. For example, in the case of performing safety control of a service robot, it is necessary for the actuator to be accessible from both the normal control application 102 and the safety control application 103. Accordingly, the I/O port for controlling the actuator may be shared by the RP to which the normal control application 101 belongs and the RP to which the safety control application 102 belongs.

Returning to Fig. 1, description will be continued The applications 101 to 103 are executed in the multiprogramming environment provided by the OS 100 and the processor 10. Among these applications, the safety monitoring application 101 includes instruction code for causing the processor 10 to execute monitoring of the running status of the normal control application 102, monitoring of the running status of the safety control application 103, and monitoring of the input and output data to and from the I/O port 12. The safety monitoring application 101 also includes instruction code for causing the processor 10 to execute notification of a result to the partition scheduler 21. That is, the safety monitoring application 101 is a safety-related application.

Further, the normal control application 102 includes instruction code for causing the processor 10 to execute a control procedure to cause a control target, such as a service robot, to execute a normal function/operation. The normal control application 102 also includes instruction code for causing the processor 10 to execute notification of the result to the partition scheduler 21. That is, the normal control application 102 is a non-safety-related application.

Furthermore, the safety control application 103 includes instruction code for causing the processor 10 to execute a control procedure prescribed to ensure functional safety in a case where some abnormality is detected The safety control application 103 also includes instruction code for causing the processor 10 to execute notification of the result to the partition scheduler 21. That is, the safety control application 103 is a safety-related application.

A reset circuit 14 resets a microcontroller 15 based on a signal from the OS 100. The mechanism for resetting the microcontroller 15 using the reset circuit 14 will be described later.

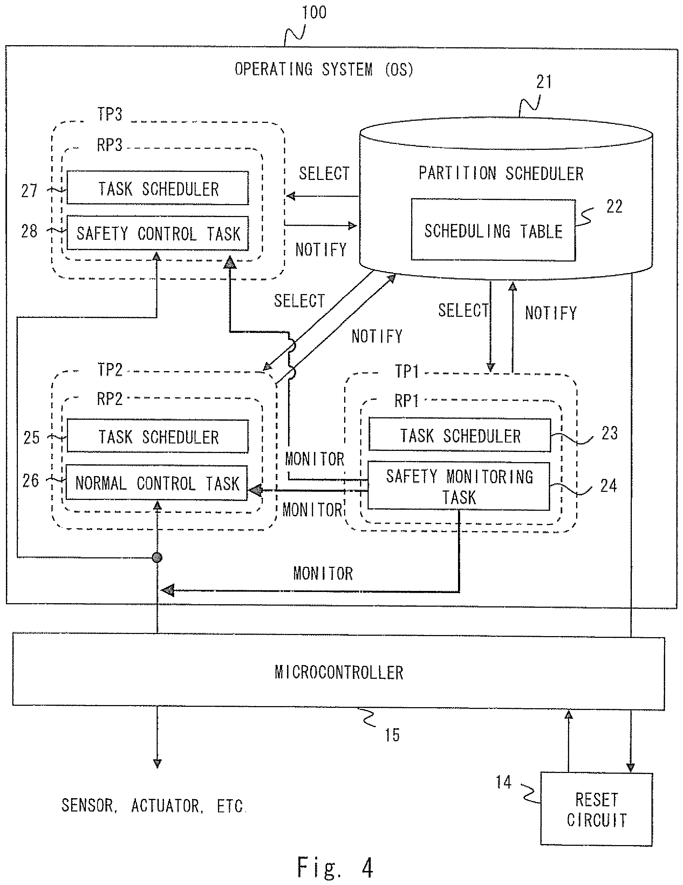

Subsequently, relationships between the partition scheduler 21 and tasks generated upon activation of the applications 101 to 103 will be described with reference to Fig. 4 Fig. 4 is a diagram showing the relationships between the partition scheduler 21 and tasks 24, 26, and 28 which are activated in the multiprogramming environment provided by the OS 100.

The microcontroller 15 includes the processor 10, the execution memory 11, the I/O port 12, and the nonvolatile memory 13. While Fig. 4 illustrates a configuration in which the reset circuit 14 is provided outside the microcontroller 15, a configuration in which the reset circuit 14 is included in the microcontroller 15 may also be employed

The microcontroller 15 is supplied with a clock signal from an external clock source, and the processor 10 and the like operate in a predetermined timer period based on the clock signal. This example is described assuming that the predetermined timer period is one tick. Accordingly, when the OS 100 is executed by the processor 10, the partition scheduler 21 operates every one tick In the TPs, task schedulers 23, 25, and 27 and the tasks (the safety monitoring task 24, the normal control task 26, and the safety control task 28) operate every one tick.

The partition scheduler 21 operates every one tick and switches the TP (partition scheduling). The partition scheduler 21 selects and decides one of TP1 to TP3 to be activated in the next one tick Further, the partition scheduler 21 starts operation of the task scheduler on the selected TP.

Specifically, the partition scheduling is performed by the partition scheduler 21 in such a manner that the partition scheduler 21 refers to a scheduling table 22 to perform the partition scheduling in accordance with a scheduling pattern defining a setting of each TP.

The scheduling table 22 retains scheduling patterns each defining a switching order and a timing of each TP. Note that the scheduling table 22 holds at least two different scheduling patterns. One is a scheduling pattern applied when abnormality detection is not performed by the safety monitoring task 24 (ie., during normal time) The other is a scheduling pattern applied when an abnormality is detected by the safety monitoring task 24. Hereinafter, the scheduling pattern applied during normal time is called a "normal control scheduling pattern", and the scheduling pattern applied upon detection of an abnormality is called a "safety control scheduling pattern".

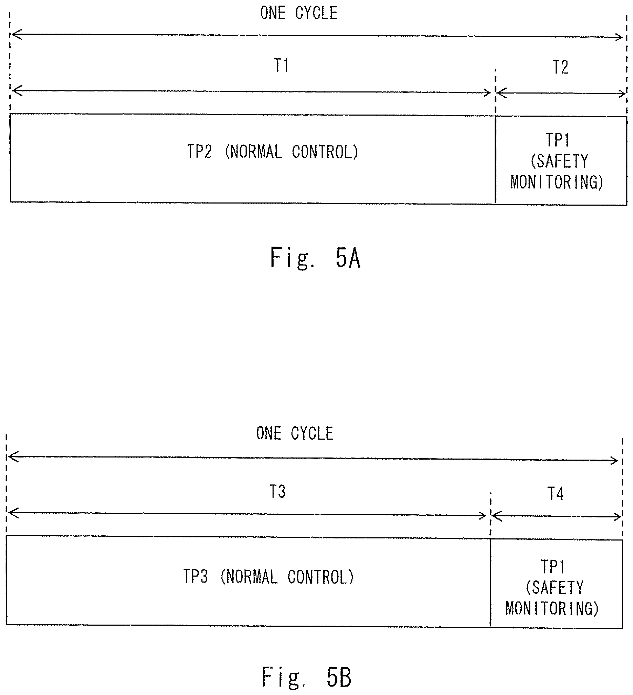

Fig. 5A shows a specific example of the normal control scheduling pattern In Fig. 5A, TP2 to which the normal control task 26 belongs is allocated to the first half (T1) of the one-cycle time. Further, TP1 to which the safety monitoring task 24 belongs is allocated to the latter half (T2) of the one-cycle time. According to the scheduling pattern shown in Fig. 5A, the normal control task 26 and the safety monitoring task 24 are repeatedly scheduled

Fig. 5B shows a specific example of the safety control scheduling pattern. In Fig. 5B, TP3 to which the safety control task 28 belongs is allocated to the first half (T3) of the one-cycle time. Further, TP1 to which the safety monitoring task 24 belongs is allocated to the latter half (T4) of the one-cycle time. According to the scheduling pattern shown in Fig 5B, the safety control task 28 and the safety monitoring task 24 are repeatedly scheduled.

Returning to Fig. 4, the description will be continued. The task schedulers 23, 25, and 27 schedule the tasks in the TPs to which the task schedulers respectively belong. Typical scheduling based on priorities may be applied to the scheduling of the tasks in the TPs. Note that Fig 4 illustrates that each TP includes only one task, but in practice, each TP includes one or more tasks. For example, TP2 for normal control may include two tasks: a normal control task A and a normal control task B.

The safety monitoring task 24 is a task generated upon activation of the safety monitoring application 101. In the example shown in Fig. 4, the safety monitoring task 24 is allocated to TP1 and RP1. The safety monitoring task 24 monitors the running status of the normal control task 26, which is a non-safety-related application, monitors the safety control task 28, which is a safety-related application, and monitors the input and output data to and from the I/O port 12. Furthermore, the safety monitoring task 24 notifies the partition scheduler 21 of the running status of the task.

The normal control task 26 is a task generated upon activation of the normal control application 102. In the example shown in Fig. 4, the normal control task 26 is allocated to TP2 and RP2. The normal control task 26 performs a control procedure for causing a control target, such as a service robot, to execute a normal function/operation Furthermore, the normal control task 26 notifies the partition scheduler 21 of the running status of the task.

The safety control task 28 is a task generated upon activation of the safety control application 103 In the example shown in Fig. 4, the safety control task 28 is allocated to TP3 and RP3. The safety control task 28 performs a control procedure prescribed to ensure functional safety in a case where some abnormality is detected Furthermore, the safety control task 28 notifies the partition scheduler 21 of the running status of the task Note that various techniques may be employed as a specific configuration for notifying the results from each task to the partition 21 For example, a task may invoke a system call (service call) of the OS 100, and results may be notified to the partition scheduler 21 through the OS 100. Alternatively, assuming that a flag related to the running status of a task is stored in the execution memory 11, the task may set the value of the flag according to the running status of the task, and the partition scheduler 21 may judge the running status of the task according to the set value of the flag.

As described above, the partition scheduler 21 operates every one tick to select and decide one of TP1 to TP3 to be activated Further, the partition scheduler 21 starts operation of the task scheduler on the selected TP. Then, when the task schedulers 23, 25, and 27 start operation, the task scheduling is carried out, and the processor 10 executes the tasks in the TP in the order of the tasks scheduled by the task schedulers 23, 25, and 27. Thus, the application allocated to the active TP is executed by the processor 10,

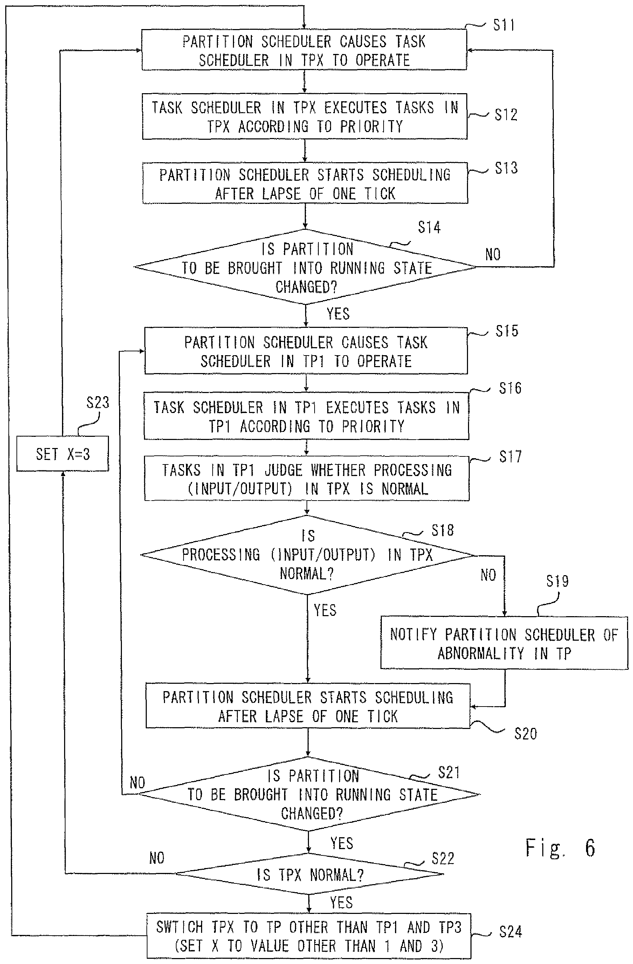

Subsequently, the partition scheduling performed by the partition scheduler 21 will be described with reference to Fig. 6. Fig 6 is a flowchart showing a specific example of the procedure of the partition scheduler 21.

First, the partitioning schedule 21, which operates every one tick, causes the task scheduler in TPX to operate (S11). Here, a variable X represents a TP number, and X is a value other than 1. Specifically, in S11, one of TP2 and TP3, excluding TP1 for safety monitoring, is caused to operate

Referring to Fig 6, a case is described by way of example in which the scheduling is executed in accordance with the normal control scheduling pattern (for example, Fig. 5A) or the safety control scheduling pattern (for example, Fig 5B). In other words, a case is described by way of example in which when TP1 is a TP subsequent to TP2 or TP3 and when an abnormality of TP2 is detected in TP1, TP3 is a TP subsequently selected and decided upon reception of the result from TP1

The task scheduler in TPX having started operation in S11 executes tasks in TPX according to priority (S12). After a lapse of one tick, the partition scheduler 21 starts scheduling of TPs (S13). Specifically, the partition scheduler 21 selects and decides one of TPs to be activated in the next one tick in accordance with the scheduling pattern.

When the TP to be subsequently activated is not changed (No in S14), the partition scheduler 21 returns to S11 to continue operation on the same TPX. Accordingly, before the timing when TPX is switched, the processing of S11 to S14 is repeated

When the TP to be subsequently activated is changed (Yes in S14), the partition scheduler 21 causes the task scheduler in the time partition to be changed to operate (S15) Here, the task scheduler in TP1 is caused to operate. Then, the task scheduler 23 in TP1 executes the tasks in TP1 according to priority (S16).

The safety monitoring task 24 executed in TP1 monitors the running status of the normal control task 26 and monitors the input and output data to and from the I/O port 12, to thereby judge whether these are normal (S17). As a result of the judgment, when it is judged that they are abnormal (No in S18), the safety monitoring task 24 notifies the partition scheduler 21 of the result (S19).

After a lapse of one tick, the partition scheduler 21 resumes scheduling (S20). The partition scheduler 21 selects and decides which TP is to be activated in the next one tick in accordance with the scheduling pattern. When the TP to be subsequently activated is not changed (No in S21), the flow returns to S15 to continue the operation on TP1.

When the TP to be subsequently activated is changed (Yes in S21), the partition scheduler 21 further judges whether TPX has been normal according to the result notified from TP1 in S19 (S22). As a result of the judgment, when it has been abnormal (No in S22), the partition scheduler 21 selects and decides TP3 as the TP to be activated in the next one tick (S23)

As a result of the judgment, when it has been normal (Yes in S22), the partition scheduler 21 selects and decides TPX other than TP1 and TP3 as the TP to be activated in the next one tick (S24)

As for the processing shown in Fig. 6, a specific example of the partition scheduling will be described.

First, a case will be described in which scheduling is started in S11 in accordance with the normal control scheduling pattern illustrated in Fig. 5A. In this case, the scheduling is started in S11 assuming that TPX=TP2, and TPX=TP2 is maintained during the processing of S12 to S14. Then, TPX is changed from TP2 to TP1 in S15, and TP1 remains unchanged during the processing of S15 to S21. When it is determined that the running status (data input and output) related to TP2 is normal in S18, TPX=TP2 holds in S24 (that is, the normal control scheduling pattern starting from TP2 is continued). Meanwhile, when it is determined that the running status (data input and output) related to TP2 is abnormal in S18, TPX=TP3 holds in S23 (that is, the scheduling pattern is switched to the safety control scheduling pattern starting from TP3).

Further, a case will be described in which scheduling is started in S11 in accordance with the safety control scheduling pattern illustrated in Fig. 5B. In this case, the scheduling is started assuming that TPX=TP3 in S11, and TPX=TP3 is maintained during the processing of S12 to S14. Then, TPX is changed from TP3 to TP1 in S15, and TP1 remains unchanged during the processing of S15 to S21. When it is determined that the running status (data input and output) related to TP3 is normal in S18. TPX=TP2 holds (that is, the scheduling pattern is switched to the normal control scheduling pattern starting from TP2) in S24 Meanwhile, when it is determined that the running status (data input and output) related to TP3 is abnormal in S18, TPX=TP3 holds (that is, the safety control scheduling pattern starting from TP3 is continued) in S23.

The above example illustrates the case where only the three TPs (TP1 for safety monitoring, TP2 for normal control, and TP3 for safety control) are combined as the scheduling pattern, but a plurality of partitions TP2 for normal control and a plurality of partitions TP3 for safety control may be present For example, scheduling patterns may be formed by a combination of five TPs (TP1 to TP5) including two TPs of TP2 and TP4 for normal control, TP1 for safety monitoring, and two TPs of TP3 and TP5 for safety control. In this case, in S23, the partition scheduler 21 may determine the type of the abnormality state of the running status (data input and output) related to TPX, and may select one of TP3 and TP5 for safety control according to the abnormality type. Further, in S24, one of TP2 and TP4 for normal control may be selected.

As described above, in this example, the OS 100 includes the partition scheduler 21 for selecting and deciding a partition to be subsequently activated in response to the notification from TP1 for safety monitoring or the notification from each TP. The partition scheduler 21 operates in the predetermined timer period independently from the tasks executed in each TP. The partition scheduler 21 which operates independently in the predetermined timer period includes a partition scheduling function, which provides the following effects.

First, in general, there is a demand for shortening the execution time of the safety monitoring task 24 as much as possible in order to sufficiently ensure the execution time of the normal control task 26. In a related art (for example, Patent Literature 1), the safety monitoring task 24 performs not only monitoring of the running status of the normal control task 26 and monitoring of the input and output data to and from the I/O port 12, but also selection and decision of the scheduling pattern. Therefore, it is necessary to allocate the execution time required for the selection and decision to TP2 to which the safety monitoring task 24 belongs.

In order to guarantee the ensuring of functional safety, it is basically necessary to alternately execute the safety monitoring task 24 and the normal control task 26. For this reason, in the related art, the selection and decision of the scheduling pattern by the safety monitoring task 24 are also executed each time upon execution of the normal control task 26. After a plurality of cycles in total, a lot of execution time is required for the safety monitoring task 24 to select and decide the scheduling pattern

On the other hand, according to this example, it is not necessary for the safety monitoring task 24 itself to execute selection and decision of the scheduling pattern. Additionally, the execution time required for the partition scheduler 21 to select and decide the scheduling pattern is shortened This provides an effect that a shorter period of time can be allocated to TP1 for safety monitoring and a longer period of time can be allocated to TP2 for normal control, as compared with the related art.

Furthermore, the processing illustrated in Fig. 6 has been described assuming that the partition scheduler 21 selects and decides TP3 for safety control (S23), or selects and decides TP2 for normal control (S24), according to the result notified from TP1, but the present invention is not limited thereto For example, a configuration in which the running status is notified to the partition scheduler 21 from each of TP1 to TP3 may be employed in place of the configuration in which the result is notified to the partition scheduler 21 only from TP1 for safety monitoring, and the partition scheduler 21 may select and decide TP3 for safety control according to the result notified from each TP.

When the partition scheduler 21 which operates independently is adapted to receive the notification of results from all TPs. the partition scheduler 21 can grasp the statuses related to all TPs in an integrated manner. Accordingly, when the partition scheduler 21 decides and selects the next partition in response to the notification of the result from TP1 for safety monitoring, for example, the partition scheduler 21 can decide and select the next partition only based on TPs in the normal state in consideration of the status of each TP. This provides an effect that more accurate partition scheduling can be achieved as compared with the related art.

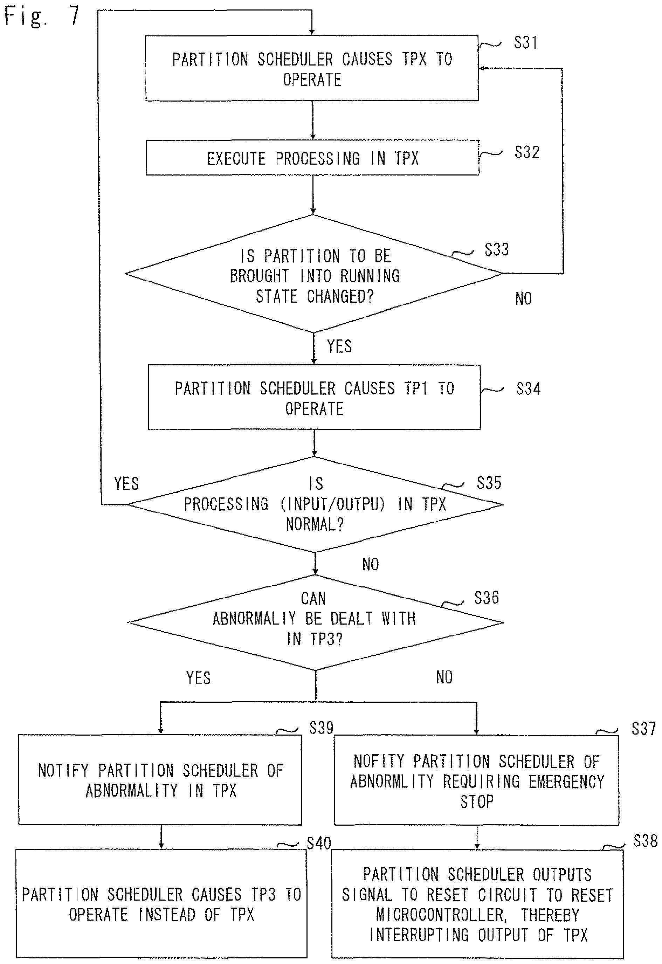

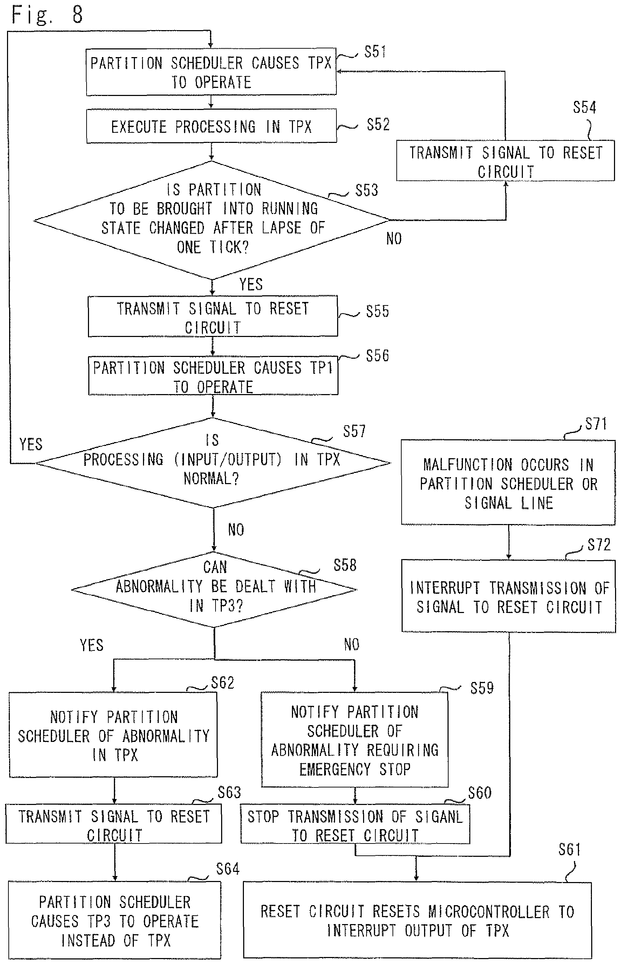

Subsequently, the mechanism for resetting the microcontroller 15 using the reset circuit 14 will be described with reference to Figs. 7 and 8. Figs. 7 and 8 are flowcharts each showing a specific example of the reset procedure of the microcontroller 15 using the reset circuit 14

In this example, the partition scheduler 21 which operates every one tick has a function of resetting the microcontroller 15 Upon detecting an abnormality in the OS 100, the partition scheduler 21 takes a measure for the abnormality in conjunction with the reset circuit 14. The reset circuit 14 resets the microcontroller 15 based on the signal from the partition scheduler 21

Referring first to Fig. 7, a specific example of the reset procedure of the microcontroller 15 using the reset circuit 14 will be described In the processing shown in Fig. 7, upon receiving a reset instruction signal from the partition scheduler 21, the reset circuit 14 resets the microcontroller 15. Note that in Fig 7, TPX is a TP other than TP1 and TP3

First, in S31 to S33, the partition scheduler 21 starts operation of TPX, thereby executing processing related to TPX until the TP to be subsequently activated is changed. After the partition scheduler 21 starts operation of the task scheduler 23 in TP1 (S34), the safety monitoring task 24 belonging to TP1 judges whether the processing (input and output) related to TPX has been normal (S35) As a result of the judgment, when the processing has been normal (Yes in S35), the flow returns to S31 to continue the operation for the same TPX.

As a result of the judgment, when the processing has been abnormal (No in S35), the safety monitoring task 24 belonging to TP1 judges whether the abnormality in TPX is an abnormality that can be dealt with by the safety control task 28 belonging to TP3 (S36). When the abnormality is not an abnormality that can be dealt with in TP3 (No in S36), the safety monitoring task 24 belonging to TP1 notifies the partition scheduler 21 of the abnormality requiring emergency stop (S37). The partition scheduler 21 having received the notification from the safety monitoring task 24 belonging to TP1 outputs a reset instruction signal to the reset circuit 14, and the reset circuit 14 having received the reset instruction signal resets the microcontroller 15 (S38).

When the abnormality is an abnormality that can be dealt with in TP3 (Yes in S36), the safety monitoring task 24 belonging to TP1 notifies the partition scheduler 21 of the abnormality in TPX (S39). The partition scheduler 21 having received the notification from TP1 switches the time partition from TPX to TP3 (S40).

Referring next to Fig 8, another specific example of the reset procedure of the microcontroller 15 using the reset circuit 14 will be described In the processing shown in Fig. 8, the partition scheduler 21 periodically transmits signals to the reset circuit 14. Further, when the transmission of signals from the partition scheduler 21 is interrupted, the reset circuit 14 resets the microcontroller 15. Note that in Fig. 8, TPX is a TP other than TP1 and TP3

In comparison with the processing of S31 to S35 shown in Fig. 7, it is clarified in S53 of Fig. 8 that the partition scheduler 21 operates every one tick, and there is a difference in that the partition scheduler 21 periodically transmits signals to the reset circuit 14 in S54 and S55. The other processing of S51 to S57 shown in Fig 8 is basically the same as that of S31 to S35 shown in Fig. 7.

Further, in comparison with the processing of S36 to S40 shown in Fig 7, there is a difference in that the partition scheduler 21 stops transmission of signals to the reset circuit 14 in S60 of Fig. 8, and that the partition scheduler 21 transmits signals to the reset circuit 14 in S63. There is another difference in that, in S61 of Fig. 8, the reset circuit 14 resets the microcontroller 15 upon interruption of the transmission of signals from the partition scheduler 21. The other processing of S58 to S64 shown in Fig. 8 is basically the same as that of S36 to S40 shown in Fig. 7

Moreover, as shown in S71 and S72 of Fig. 8, when a malfunction occurs in the partition scheduler 21, or when a malfunction occurs in a signal line from the partition scheduler 21 to the reset circuit 14, in parallel with the processing of S51 to S64, the transmission of signals from the partition scheduler 21 to the reset circuit 14 is interrupted. Also in this case, the reset circuit 14 resets the microcontroller 15 upon interruption of the transmission of signals from the partition scheduler 21 (S61)

According to the processing shown in Fig. 8, the microcontroller 15 can be reliably reset not only when the reset instruction is intentionally issued from the partition scheduler 21 to the reset circuit 14, but also when the partition scheduler 21 itself fails to operate normally due to some causes or when a malfunction occurs in a signal line for transmitting signals from the partition scheduler 21 to the reset circuit 14 At the same time, execution of normal switching of TPs every one tick can also be guaranteed.

Note that in Figs. 7 and 8, the description has been made assuming that the partition scheduler 21 outputs the reset instruction signal to the reset circuit 14 or stops transmission of the signal to the reset circuit 14 in response to the notification of the result from TP1. Alternatively, the partition scheduler 21 may output the reset instruction signal to the reset circuit 14 or stop transmission of the signal to the reset circuit 14 in response to the notification of the result from any one of TP1 to TP3

### <First Embodiment of the Invention>

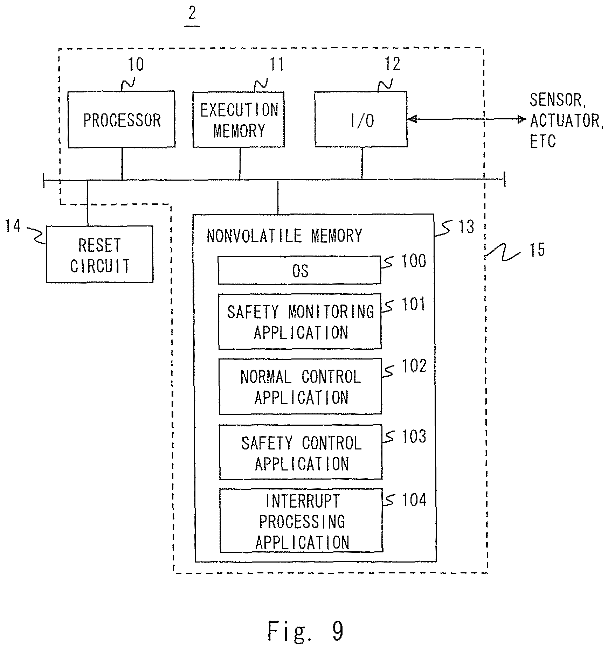

Referring now to Fig. 9, a safety controller 2 according to a first embodiment of the invention will be described. Fig. 9 is a block diagram showing a configuration example of the safety controller 2 according to the first embodiment. Hereinafter, description of the same contents as those of the safety controller I according to the previous example is omitted

The processor 10 detects an interrupt from a control target, and a timer interrupt. The processor 10 detects an interrupt from a control target upon receiving an interrupt signal from the control target. The processor 10 executes an interrupt handler 31, which will be described later, upon detecting the interrupt from the control target. Here, the microcontroller 15 of the safety controller 2 includes a timer (not shown). The timer outputs an interrupt signal to the processor 10 in a predetermined period based on a clock signal. The processor 10 detects the timer interrupt upon receiving the interrupt signal from the timer. The processor 10 executes the partition scheduler 21 upon detecting the interrupt from the control target.

The nonvolatile memory 13 stores an interrupt processing application 104. The interrupt processing application 104 includes instruction code for causing the processor 10 to execute interrupt processing in response to the interrupt from the control target The interrupt processing application 104 may also include instruction code for causing the processor 10 to execute notification of a result to the partition scheduler 21. The interrupt processing application 104 may be a safety-related application or a non-safety-related application Here, a plurality of interrupt processing applications 104 are prepared to respectively correspond to interrupt factors In other words, the interrupt processing applications 104 include instruction code for interrupt processing to be executed in response to interrupts corresponding to the respective interrupt factors Note that a single interrupt processing application 104 may correspond to two or more interrupt factors

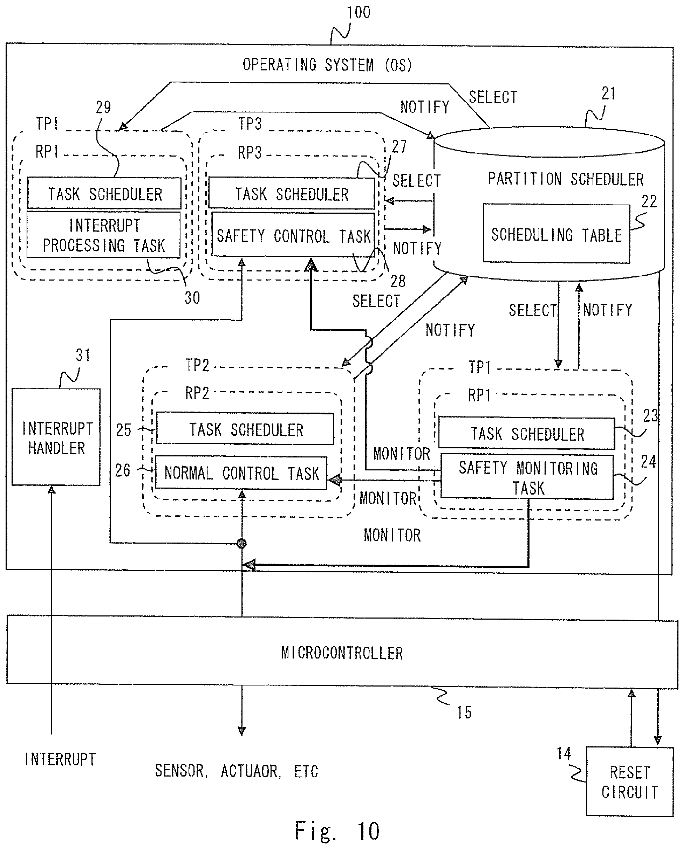

Subsequently, relationships between the partition scheduler 21, tasks generated upon activation of the applications 101 to 104, and the interrupt handler 31 will be described with reference to Fig. 10. Fig 10 is a diagram showing the relationships between the partition scheduler 21, tasks 24, 26, 28, and 30, and the interrupt handler 31 which are activated in the multiprogramming environment provided by the OS 100. Hereinafter, description of the same contents as those of the safety controller 1 according to the previous example is omitted

The partition scheduler 21 operates every one tick and performs partition scheduling in response to a timer interrupt generated every one tick In other words, the processing of partition scheduling in the partition scheduler 21 corresponds to processing of the partition scheduler 21 registered as an interrupt handler of the timer interrupt in initialization processing immediately after activation of the partition scheduler 21, for example. The partition scheduler 21 selects and decides which of TP1 to TP3 and the timer partition TPI dedicated to interrupt processing is to be activated during the next one tick The interrupt processing task 30 belongs to TPI

A task scheduler 29 performs scheduling of the interrupt processing task 30 belonging to TPI, in the same manner as the task schedulers 23, 25, and 27.

The interrupt processing task 30 is a task generated upon activation of the interrupt processing application 104. Accordingly, the interrupt processing task 30 executes the interrupt processing in response to an interrupt from a control target. Further, a plurality of interrupt processing tasks 30 are generated so as to correspond to the respective interrupt factors. When an interrupt from a control target is generated, the interrupt processing task 30 generated upon activation of the interrupt processing application 104 corresponding to the interrupt factor of the interrupt is executed. The interrupt processing task 30 may perform a control procedure for causing the control target to execute a normal function/operation, or may perform a control procedure prescribed to ensure functional safety.

The interrupt handler 31 is executed in response to the interrupt from the control target When the interrupt from the control target is generated, the interrupt handler 31 performs execution reservation so that the interrupt processing task 30 for executing the interrupt processing in response to the interrupt is executed in TPI. Note that the interrupt handler 31 reserves execution of the interrupt processing task 30 corresponding to the interrupt factor of the generated interrupt. Thus, in the first embodiment, only reservation of execution of the interrupt processing task 30 is performed as the processing in the interrupt handler 31 executed in response to the interrupt, and the interrupt processing task 30, which has been reserved to be executed, is executed in TPI. Accordingly, the processing time in the interrupt handler 31 is incomparably smaller as an execution time than that for executing the interrupt processing. Therefore, no delay occurs in the processing in the TP which is activated when the interrupt is generated.

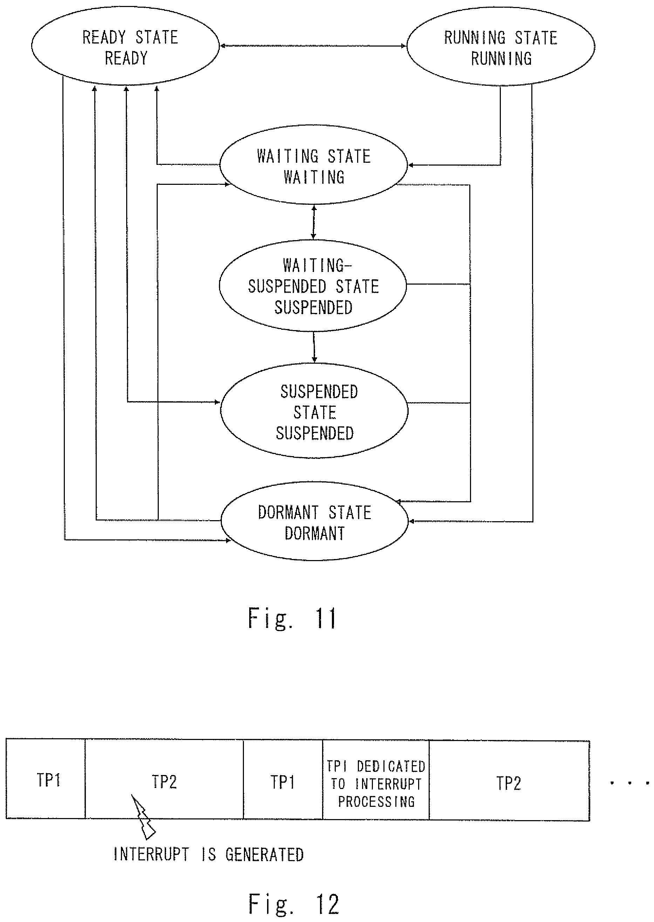

Referring next to Fig. 11, states of the tasks will be described. Fig. 11 is a task state transition diagram. Each of the tasks 24, 26, 28, and 30 takes one of a running state, a ready state, a waiting state, a waiting-suspended state, a suspended state, and a dormant state.

The running state is a state in which the execution time of the processor 10 is allocated to tasks by the task schedulers 23, 25, 27, and 29. When a task is in the running state, the task is being executed by the processor 10 When the execution time of the processor 10, which is allocated by the task schedulers 23, 25, 27, and 29, is used up, for example, a task in the running state transits to the ready state Further, when the task in the running state goes to a sleep state, for example, the task transits to the waiting state

The ready state is a state in which the execution time of the processor 10 can be allocated to tasks but the execution time of the processor 10 has not been allocated The ready state is, for example, a state in which a task is a wakened. When the execution time of the processor 10 is allocated by the task schedulers 23, 25, 27, and 29, for example, the task in the ready state transits to the running state.

The waiting state is a state in which the execution time of the processor 10 cannot be allocated to tasks and the execution time of the processor 10 has not been allocated The waiting state is, for example, a state in which a task is in the sleep state. When the sleep time has expired, or when the task is a wakened from the sleep state upon reception of an inter-task communication from another task, for example, the task in the waiting state transits to the ready state

The suspended state is a state in which the execution time of the processor 10 cannot be allocated to tasks and the execution time of the processor 10 has not been allocated The suspended state is, for example, a state in which execution of a task in the ready state is temporarily inhibited by the partition scheduler 21, the task scheduler 23, 25, 27, or 29, or another task When the suspended state is released by the partition scheduler 21, the task scheduler 23, 25, 27, or 29, or another task, the task in the suspended state transits to the ready state.

The waiting-suspended state is a state in which the execution time of the processor 10 cannot be allocated to tasks and the execution time of the processor 10 has not been allocated. The waiting-suspended state is, for example, a state in which execution of a task in the waiting state is temporarily inhibited by the partition scheduler 21, the task scheduler 23, 25, 27, or 29, or another task. When the suspended state is released by the partition scheduler 21, the task scheduler 23, 25, 27, or 29, or another task, the task in the suspended state transits to the waiting state. Further, when the task in the suspended state is a wakened, the task transits to the suspended state

The dormant state is a state in which the execution time of the processor 10 cannot be allocated to tasks and the execution time of the processor 10 has not been allocated The dormant state is, for example, a state in which a task is not activated, or a state in which a task is finished

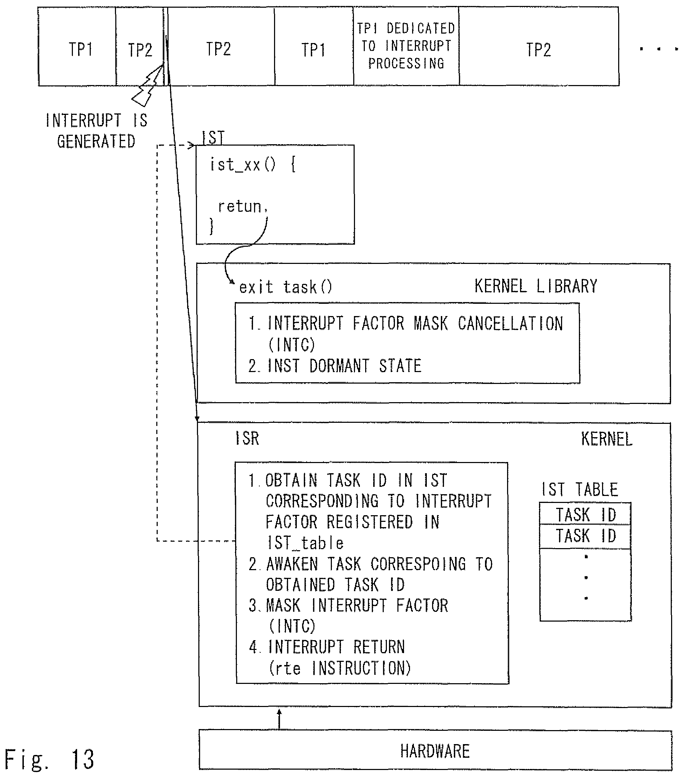

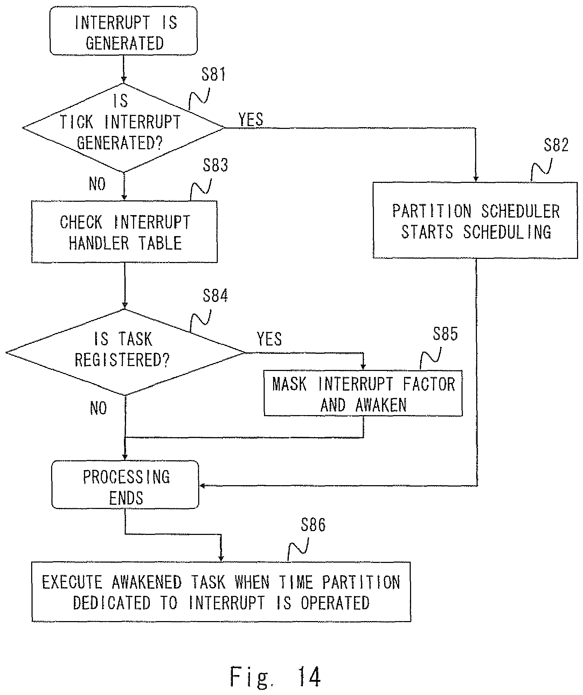

Referring next to Figs 12 to 14, a procedure of the safety controller 2 upon generation of an interrupt according to the first embodiment will be described. Fig. 12 is a diagram showing a specific example of the scheduling pattern according to the first embodiment. That is, the first embodiment exemplifies a case where the scheduling pattern illustrated in Fig. 12 is stored in the scheduling table 22. Fig. 13 is a conceptual diagram showing a procedure upon generation of an interrupt according to the first embodiment. Fig. 14 is a flowchart showing a specific example of the procedure upon generation of an interrupt according to the first embodiment.

Upon generation of an interrupt, when the interrupt is a tick interrupt (Yes in S81), the processor 10 executes the partition scheduler 21 That is, when a timer interrupt is generated, the processor 10 executes the partition scheduler 21 The partition scheduler 21 starts the partition scheduling of the time partitions in accordance with the scheduling pattern shown in Fig. 12 (S82).

When the interrupt is not a tick interrupt (No in S81), the processor 10 executes the interrupt handler 31. That is, when an interrupt from a control target is generated, the processor 10 executes the interrupt handler 31. The interrupt handler 31 determines whether the interrupt processing task 30 corresponding to the interrupt factor of the generated interrupt is registered in an interrupt handler table IST_table (S83)

The interrupt handler table IST_table is a table which correlates interrupt factors with the interrupt processing tasks 30. Specifically, the interrupt handler table IST_table correlates interrupt factors with task IDs of the interrupt processing tasks 30 to be executed in response to interrupts corresponding to the respective interrupt factors. The interrupt handler table IST_table is stored in the execution memory 11, for example. Note that the interrupt handler table IST_table may be any information as long as the information correlates the interrupt factors with the interrupt processing tasks 30. For example, as illustrated in Fig. 13, the interrupt handler table IST_table may be information in which the task IDs of the interrupt processing tasks 30 respectively corresponding to a plurality of interrupt factors are stored in areas respectively corresponding to the plurality of interrupt factors.

The interrupt handler 31 refers to a value of an interrupt factor register to specify the interrupt factor. The interrupt factor register is a register storing a value representing the interrupt factor of the generated interrupt. For example, when a control target generates an interrupt, the control target sets a value in the interrupt factor register. The interrupt factor register (not shown) is included in the microcontroller 15

When the task corresponding to the interrupt factor is not registered (No in S84), the interrupt handler 31 ends the processing.

When the interrupt processing task 30 corresponding to the interrupt factor is registered (Yes in S84), the interrupt handler 31 awakens the task. Specifically, the interrupt handler 31 acquires, from the interrupt handler table, the task ID stored in the area corresponding to the interrupt factor of the generated interrupt. The interrupt handler awakens the task through an inter-task communication designated by the acquired task ID, for example As a result, only the interrupt processing task 30 corresponding to the interrupt factor of the interrupt is brought into the ready state, and the other interrupt processing tasks 30 remain in the waiting state. The interrupt handler 31 masks the interrupt factor of the interrupt (S85). Then, the interrupt handler 31 ends the processing.

In this manner, when TPI is activated, the task scheduler 29 allocates the execution time of the processor 10 to the interrupt processing task 30, which is brought into the ready state, so that the interrupt processing task 3 transits to the running state. That is, the interrupt handler 31 brings the interrupt processing task 30 into the ready state, thereby performing execution reservation so that the interrupt execution task 30 is executed in TPI.

After a lapse of a certain period of time, when TPI is activated, the partition scheduler 21 allows the task scheduler 29 to operate The task scheduler 29 executes the interrupt processing task 30 awakened by the interrupt handler 31 (S86).

As described above, in the processing upon generation of an interrupt according to the first embodiment, when an interrupt from a control target is generated, the processor 10 executes the interrupt handler 31, thereby performing only the execution reservation of the interrupt processing task 30. Further, the execution time of the processor 10 is allocated to the interrupt processing task 30 which is reserved to be executed in TPI, and the interrupt processing task 30 is executed Accordingly, no delay occurs in the processing of the task in the TP which is activated upon generation of an interrupt, so that the time resource necessary for the processing in the TP is guaranteed This prevents a failure of processing in the next TP.

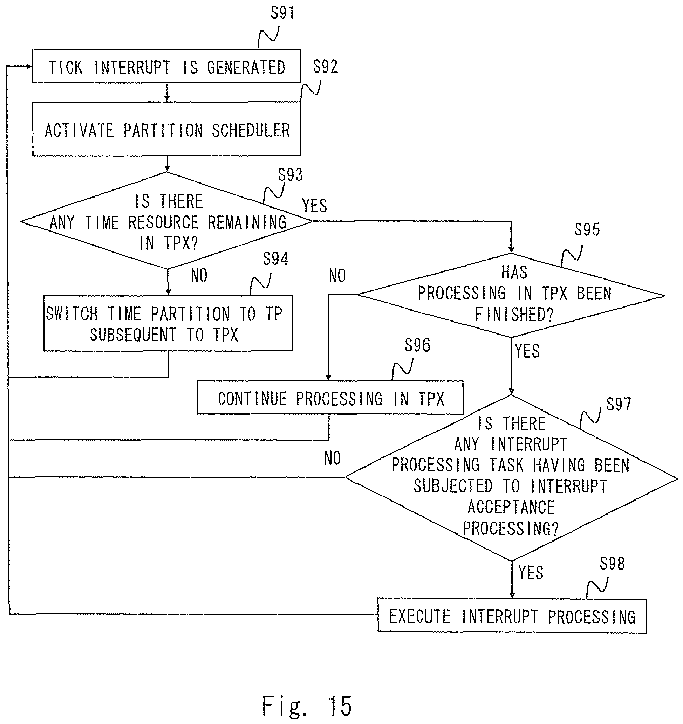

Referring next to Fig. 15, the scheduling procedure according to the first embodiment of the present invention will be described Fig. 15 is a flowchart showing a specific example of the scheduling procedure according to the first embodiment of the present invention.

When a tick interrupt is generated (S91), the processor 10 executes the partition scheduler 21 (S92). The partition scheduler 21 determines whether the time source still remains in the currently active TPX (S93). In other words, the partition scheduler 21 determines whether the period of TPX has expired Note that TPX in Fig. 15 indicates any one of TP1 to TP3 and TPI Here, description is given assuming that TPX is one of TP1 to TP3.

The partition scheduler 21 determines whether a time resource remains based on whether there is an extra time in the period of TPX excluding a period elapsed since activation of TPX. For example, information indicating the number of ticks in the period of each of TP1 to TP3 and TPI is preliminarily stored in the execution memory 11 Further, the partition scheduler 21 counts the number of ticks every time the partition scheduler 21 operates every one tick, after TPX is activated. The counted number of ticks indicates a period elapsed since activation of TPX The partition scheduler 21 determines whether a time resource remains based on whether the number of ticks indicated by the information stored in the execution memory 11 is greater than the counted number of ticks.

When no time resource remains in TPX (No in S93), the partition scheduler 21 switches the time partition to a TP subsequent to TPX (S94). The partition scheduler 21 stops operation of the task scheduler belonging to TPX, and starts operation of the task scheduler belonging to the TP subsequent to TPX. The task scheduler starting the operation executes the tasks in the TP to which the task scheduler itself belongs. Further, the partition scheduler 21 waits for a subsequent tick interrupt (S91).

When a time resource remains in TPX (Yes in S93), the partition scheduler 21 determines whether the processing in TPX has been finished (S95) That is, the partition scheduler 21 determines whether the execution of the tasks belonging to TPX has been finished. A determination as to whether the execution of the tasks has been finished is made based on whether the tasks belonging to TPX aren't in the ready state or in the running state.

When the processing in TPX has not been finished (No in S95), the partition scheduler 21 causes the task scheduler belonging to TPX to continue the processing in TPX, without executing switching of the TP (S96) That is, the task scheduler belonging to TPX executes the tasks which belong to TPX and are in the ready state

When the processing in TPX has been finished (Yes in S95), the partition scheduler 21 determines whether there is any interrupt processing task 30 having been subjected to interrupt acceptance processing (S85) (S97). That is, the partition scheduler 21 determines whether there is any interrupt processing task 30 which has been awakened and come into the ready state,

When there is no interrupt processing task having been subjected to interrupt acceptance processing (S85) (No in S97), the partition scheduler 21 waits for a subsequent tick interrupt (S91).

When there is an interrupt processing task having been subjected to interrupt acceptance processing (S85) (Yes in S97), the partition scheduler 21 executes interrupt processing (S98). Specifically, the partition scheduler 21 switches the time partition from TPX to TPI and activates TPI for the remaining period of TPX. The partition scheduler 21 stops operation of the task scheduler belonging to TPX, and starts operation of the task scheduler 29 belonging to TPI. The task scheduler 29 executes the interrupt processing tasks 30 in the ready state among the interrupt processing tasks 30 belonging to TPI. Note that the period in which TPI is activated may be arbitrarily set as long as the period falls within the remaining period of TPX.

As described above, in the processing upon generation of an interrupt according to the : first embodiment, when the tasks belonging to TPX prior to TPI have been finished before the period of TPX prior to TPI has expired, the execution time of the processor 10 in TPX prior to TPI is allocated to any of the interrupt processing tasks 30, which are reserved to be executed, in place of the execution time of the processor 10 in TPI. Accordingly, the interrupt processing tasks 30 can be executed in TPX prior to TPI without waiting until TPI. Further, the interrupt processing tasks 30 are executed using the remaining time resource of TPX, thereby guaranteeing the time resource necessary for the processing in TPX. Therefore, a failure of processing can be prevented while suppressing execution delay of the interrupt processing.

Note that in the first embodiment, priorities may be set for execution of the interrupt processing tasks 30 such that the interrupt processing tasks 30, which cause no problem if they wait for execution of processing until TPI, are given a low priority and the interrupt processing tasks 30 required to execute processing as soon as possible are given a higher priority. The interrupt processing tasks 30 having higher priorities are preferentially executed by the task scheduler 29 This makes it possible to further suppress execution delay of the interrupt processing in the interrupt processing tasks 30 required to be executed as soon as possible.

### <second Embodiment of the Invention>

Subsequently, the safety controller 2 according to a second embodiment of the invention will be described Note that the configuration of the safety controller 2 according to the second embodiment is similar to that of the safety controller 2 according to the first embodiment, so the description thereof is omitted. The relationships between the partition scheduler 21, the tasks 24, 26, 28, and 30, and the interrupt handler 31 are also similar to those of the safety controller 2 according to the first embodiment, so the description thereof is omitted

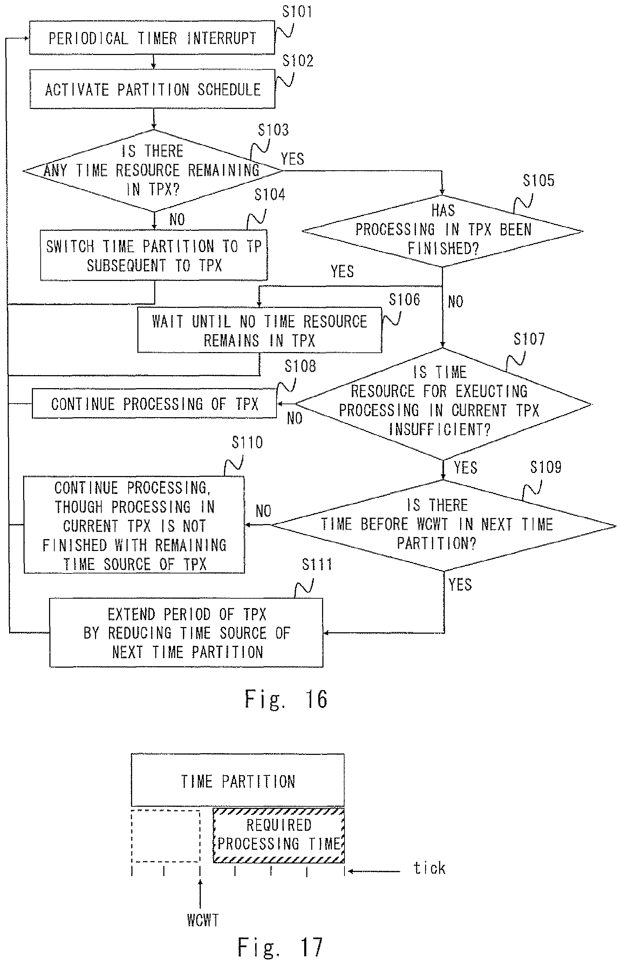

Referring now to Fig 16, the scheduling procedure according to the second embodiment of the present invention will be described. Fig. 16 is a flowchart showing a specific example of the scheduling procedure according to the second embodiment of the present invention. Note that steps S101 to S105 are similar to steps S91 to 95, so the description thereof is omitted Note that TPX in Fig 16 indicates any one of TP1 to TP3 and TPI

When the processing in TPX has been finished (Yes in S105), the partition scheduler 21 waits until no time resource remains in TPX (S106) That is, the partition scheduler 21 repeats the processing of steps S101, S102, S103, and S105 until no time resource remains in TPX. Then, when no time resource remains in TPX (No in S103), the partition scheduler 21 switches the time partition to a TP subsequent to TPX.

When the processing in TPX has not been finished (No in S105), the partition scheduler 21 determines whether the time resource for executing the current processing in TPX is insufficient or not (S107) The time resource is insufficient in a case where, for example, a number of interrupts are generated when TPX corresponds to TPI, and a number of interrupt processing tasks 30 are awakened. In a case where a number of interrupts are generated due to different interrupt factors, for example, a plurality of interrupt processing tasks 30 are awakened. In this case, execution of all the interrupt processing tasks 30 may not be finished only with the time resource of TPI.

Here, the partition scheduler 21 determines whether the time resource is insufficient or not based on whether the remaining period of TPX is less than the period necessary for execution of unexecuted tasks belonging to TPX. For example, information indicating the number of ticks in the period of each of TP1 to TP3 and TPI is preliminarily stored in the execution memory 11 Further, information indicating the number of ticks in the period necessary for execution of each task is preliminarily stored in the execution memory 11. The partition scheduler 21 calculates the number of ticks corresponding to the remaining period of TPX based on the number of ticks counted after TPX is activated and the number of ticks in TPX indicated by the information stored in the execution memory 11. Then, the partition scheduler 21 determines whether the time resource is insufficient or not based on whether the calculated number of remaining ticks is equal to or greater than the number of ticks necessary for execution of unexecuted tasks indicated by the information stored in the execution memory 11

When the time resource is sufficient (No in S107), the partition scheduler 21 causes the task scheduler belonging to TPX to continue the processing in TPX, without executing switching of the TP (S108). That is, the task scheduler belonging to TPX executes the tasks which belong to TPX and are in the ready state.

When the time resource is insufficient (Yes in S107), the partition scheduler 21 determines whether there is a time between the start of the next TP and a WCWT (Worst Case Wakeup Time) in the next TP (S109). Referring now to Fig. 17, WCWT will be described. The term "WCWT" refers to a time when processing can be finished without fail within the period of a TP if the processing is started within the ticks included in the period of the TP as shown in Fig. 17. That is, the WCWT indicates a point at which execution of a task belonging to the TP can be finished within the period of the TP if the execution of the task is started within the period the TP.

For example, the partition scheduler 21 determines whether there is a time before the WCWT is reached based on whether there is an extra time in the period of the TP subsequent to TPX, excluding the period necessary for execution of the tasks belonging to the TP. Then, based on the information preliminarily stored in the execution memory 11, it is determined whether there is a time before the WCWT in the TP subsequent to TPX based on whether the number of ticks in the period of the TP subsequent to TPX is greater than the sum of ticks necessary for execution of the tasks belonging to the TP.

When there is no time before the WCWT in the next TP (No in S109), the processing in the current TPX cannot be finished with the remaining time resource of TPX, but the partition scheduler 21 continues the processing (S110) That is, the partition scheduler 21 continues operation of the task scheduler belonging to TPX until no time resource remains in TPX. The partition scheduler 21 may be adapted to switch the time partition to TP3 as needed, and to instruct the reset circuit 14 to reset the microcontroller 15. This configuration may be employed when, for example, an abnormality occurs due to the fact that the processing in TPX has not been finished When the abnormality caused due to the fact that the processing in TPX has not been finished is an abnormality that can be dealt with in the safety control task 28, the partition scheduler 21 switches the time partition from TPX to TP3. If the abnormality caused due to the fact that the processing in TPX has not been finished is an abnormality requiring emergency stop, the partition scheduler 21 resets the microcontroller 15

When there is a time before the WCWT in the next TP (Yes in S109), the partition scheduler 21 extends the period of TPX by reducing the time resource of the next TP (S111). Here, the extended period may be arbitrarily set as long as the period falls within the period between the start of the period of the next TP and the WCWT in the next TP.

As described above, according to the second embodiment, in the case where there is an extra time in the period of the TP subsequent to TPI, excluding the period necessary for execution of the tasks belonging to the TP subsequent to TPI, when the execution of the interrupt processing task 30 has not been finished until the period of TPI has expired, the period of TPI can be extended within the range of the extra period. Accordingly, even when a number of interrupts are generated and all the interrupt processing tasks 30 cannot be executed with the time resource of TPI, the execution of the interrupt processing tasks 30 can be continued without waiting for the next TPI by using the time resource of the TP subsequent to TPI This makes it possible to suppress execution delay of the interrupt processing. Further, since the remaining time resource of the TP subsequent to TPI is used, a failure of processing can be prevented from being caused due to execution delay of the interrupt processing

Moreover, the present invention is not limited to the above embodiments, and various modifications can be made without departing from the scope of the present invention as described above For example, the present invention can also be carried out by combining all or part of the first and second embodiments

This embodiment has exemplified the case where the tasks belonging to TP1 to TP3 respectively correspond to the safety monitoring task 24, the normal control task 26, and the safety control task 28, but the types and the number of the tasks belonging to the TPs are not limited thereto For example, a plurality of safety monitoring tasks 24, a plurality of normal control tasks 26, and a plurality of safety control tasks 28 may respectively belong to TP1 to TP3. Alternatively, tasks for executing any processing other than the safety monitoring task 24, the normal control task 26, and the safety control task 28 may belong to each of TP1 to TP3.

While this embodiment has exemplified the case where the OS includes TP1 to TP3 and TPI, the types and the number of TPs are not limited thereto. Also the scheduling pattern is not limited to that exemplified in this embodiment

In the second embodiment, when a period for controlling a control target includes an extra time, a TP for period transfer may be provided next to the TP, the time resource of which is likely to be insufficient, like TPI.

### Preference Signs List

- 1, 2: SAFETY CONTROLLER
- 10: PROCESSOR
- 11: EXECUTION MEMORY
- 12: I/O PORT
- 13: NONVOLATILE MEMORY
- 14: RESET CIRCUIT
- 15: MICROCONTROLLER
- 21: PARTITION SCHEDULER
- 22: SCHEDULING TABLE
- 23, 25, 27, 29: TASK SCHEDULER
- 24: SAFETY MONITORING TASK
- 26: NORMAL CONTROL TASK
- 28: SAFETY CONTROL TASK
- 30: INTERRUPT PROCESSING TASK
- 31: INTERRUPT HANDLER
- 100: OPERATING SYSTEM
- 101: SAFETY MONITORING APPLICATION
- 102: NORMAL CONTROL APPLICATION
- 103: SAFETY CONTROL APPLICATION
- 104: INTERRUPT PROCESSING APPLICATION

## Claims

1. A safety controller (1, 2) comprising;
a processor (10);
a system program (100) for controlling allocation of an execution time of the processor to a safety-related task (24/28) for executing processing related to ensuring of functional safety of a control target, a non-safety-related task (26) for executing other processing related to control of the control target, and an interrupt processing task (30) for executing processing in response to an interrupt from the control target; and
an interrupt handler (31) executed in response to the interrupt from the control target, wherein
the processor executes the system program to schedule the tasks in accordance with a scheduling pattern in which a predetermined one cycle time is divided into a safety-related time partition in which the execution time is allocated to the safety-related task, a non-safety-related time partition in which the execution time is allocated to the non-safety-related task, and a reservation execution time partition in which the execution time is allocated to an execution reserved task which is reserved to be executed,
upon generation of an interrupt from the control target, the processor executes the interrupt handler to reserve execution of the interrupt processing task for executing processing in response to the interrupt, as the execution reserved task, and
in the scheduling, when execution of the tasks allocated to a currently active time partition prior to the reservation execution time partition is finished before the period of the currently active time partition has expired, the processor allocates the execution time in the currently active time partition to any of the execution reserved tasks, in place of the execution time in the reservation execution partition.

2. The safety controller according to Claim 1, wherein in the scheduling, when execution of the execution reserved task is not finished before the period of the reservation execution time partition has expired, in a case where there is an extra period in a period of a next time partition subsequent to the reservation execution time partition, excluding a period necessary for execution of a task to which the execution time is allocated in the next time partition, the processor extends the period of the reservation execution time partition within the range of the extra period.

3. The safety controller according to claim 1 or 2, further comprising a storage unit that stores correspondence information correlating an interrupt factor for the interrupt from the control target with the interrupt processing task for executing processing in response to the interrupt corresponding to the interrupt factor,
wherein in the scheduling, the processor reserves execution of the interrupt processing task corresponding to the interrupt factor for the interrupt from the control target, as the execution reserved task, based on the correspondence information stored in the storage unit.

4. The safety controller according to any one of Claims 1 to 3, wherein
the interrupt processing task has a predetermined priority, and
the processor preferentially allocates, in the scheduling, the execution time in the previous time partition to the execution reserved task, in place of the execution time in the reservation execution partition, the execution reserved task being an interrupt processing task having a higher priority.

5. The safety controller according to any one of Claims 1 to 4, wherein
in the scheduling, when the task to which the execution time is allocated in the time partition is in a ready state, the processor allocates the execution time to the task in the time partition, and
in the execution reservation of the execution reserved task, the processor brings the interrupt processing task into a ready state to reserve execution of the interrupt processing task as the execution reserved task.

6. A safety control method comprising the steps of:
reserving, upon generation of an interrupt from a control target, execution of an interrupt processing task (30) for executing processing in response to the interrupt, as an execution reserved task; and
scheduling tasks in accordance with a scheduling pattern in which a predetermined one cycle time is divided into a safety-related time partition in which an execution time of a processor (10) is allocated to a safety-related task (24/28) for executing processing related to ensuring of functional safety of the control target, a non-safety-related time partition in which the execution time is allocated to a non-safety-related task (26) for executing other processing related to control of the control target, and a reservation execution time partition in which the execution time is allocated to the execution reserved task which is reserved to be executed,
wherein in the step of the scheduling, when execution of the tasks allocated to a currently active time partition prior to the reservation execution time partition is finished before the period of the currently active time partition has expired, the execution time in the currently active time partition is allocated to any of the execution reserved tasks, in place of the execution time in the reservation execution partition.

## Patentansprüche

1. Sicherheitssteuerungsvorrichtung (1, 2), mit:
einem Prozessor (10);
einem Systemprogramm (100) zur Steuerung der Zuweisung einer Prozessorausführungszeit an eine sicherheitsbezogene Aufgabe (24/28) zum Ausführen einer auf die Wahrung der Funktionssicherheit eines Steuerungsobjekts bezogenen Verarbeitung, eine nicht sicherheitsbezogene Aufgabe (26) zum Ausführen einer auf die Steuerung des Steuerungsobjekts bezogenen anderen Verarbeitung und eine Unterbrechungsverarbeitungsaufgabe (30) zum Durchführen einer Verarbeitung als Antwort auf eine Unterbrechung von dem Steuerungsobjekt; und
einer Unterbrechungsbehandlungsroutine (31), die als Antwort auf die Unterbrechung von dem Steuerungsobjekt ausgeführt wird, wobei
der Prozessor das Systemprogramm ausführt, um die Aufgaben in Übereinstimmung mit einem Ablaufplanungsschema zu planen, bei dem eine vorbestimmte Periodenzeit unterteilt wird in einen sicherheitsbezogenen Zeitteilbereich, bei dem die Ausführungszeit an die sicherheitsbezogene Aufgabe zugewiesen wird, einen nicht sicherheitsbezogenen Zeitteilbereich, bei dem die Ausführungszeit an die nicht sicherheitsbezogene Aufgabe zugewiesen wird, und einen reservierten Ausführungszeitteilbereich, bei dem die Ausführungszeit an eine ausführungsreservierte Aufgabe zugewiesen wird, die zur Ausführung reserviert ist,
der Prozessor bei Erzeugung einer Unterbrechung von dem Steuerungsobjekt die Unterbrechungsbehandlungsroutine als die ausführungsreservierte Aufgabe ausführt, um die Ausführung der Unterbrechungsverarbeitungsaufgabe zum Ausführen einer Verarbeitung als Antwort auf die Unterbrechung zu reservieren, und
falls die Ausführung der Aufgaben, die an einen gegenwärtig aktiven Zeitteilbereich vor dem reservierten Ausführungszeitteilbereich zugewiesen sind, vor Ablauf der Zeitspanne des gegenwärtig aktiven Zeitteilbereiches beendet ist, der Prozessor bei der Ablaufplanung die Ausführungszeit in dem gegenwärtig aktiven Zeitteilbereich anstelle der Ausführungszeit in dem reservierten Ausführungszeitteilbereich an eine der ausführungsreservierten Aufgaben zuweist.

2. Sicherheitssteuerungsvorrichtung nach Anspruch 1, wobei, falls die Ausführung der ausführungsreservierten Aufgabe nicht vor Ablauf der Zeitspanne des reservierten Ausführungszeitteilbereiches beendet ist, im Fall, dass es eine zusätzliche Zeitspanne in einer Zeitspanne eines auf den reservierten Ausführungszeitteilbereich nachfolgenden nächsten Zeitteilbereiches gibt, ausschließlich einer für die Ausführung einer Aufgabe notwendigen Zeitspanne, an die Ausführungszeit in dem nächsten Zeitteilbereich zugewiesen ist, der Prozessor bei der Ablaufplanung die Zeitspanne des reservierten Ausführungszeitteilbereiches innerhalb des Bereiches der zusätzlichen Zeitspanne ausweitet.

3. Sicherheitssteuerungsvorrichtung nach Anspruch 1 oder 2, ferner mit einer Speichereinheit, die Korrespondenzinformationen speichert, die einen Unterbrechungsfaktor für die Unterbrechung von dem Steuerungsobjekt mit der Unterbrechungsverarbeitungsaufgabe zur Ausführung einer Verarbeitung als Antwort auf die dem Unterbrechungsfaktor entsprechende Unterbrechung korreliert,
wobei der Prozessor bei der Ablaufplanung die Ausführung der dem Unterbrechungsfaktor entsprechenden Unterbrechungsverarbeitungsaufgabe basierend auf in der Speichereinheit gespeicherten Korrespondenzinformationen für die Unterbrechung von dem Steuerungsobjekt als die ausführungsreservierte Aufgabe reserviert.

4. Sicherheitssteuerungsvorrichtung nach einem der Ansprüche 1 bis 3, wobei die Unterbrechungsverarbeitungsaufgabe eine vorbestimmte Priorität aufweist, und der Prozessor bei der Ablaufplanung die Ausführungszeit in dem vorhergehenden Zeitteilbereich vorzugsweise an die ausführungsreservierte Aufgabe zuweist, wobei die ausführungsreservierte Aufgabe eine Unterbrechungsverarbeitungsaufgabe mit einer höheren Priorität ist.

5. Sicherheitssteuerungsvorrichtung nach einem der Ansprüche 1 bis 4, wobei, falls die Aufgabe, an die die Ausführungszeit zugewiesen ist, in dem Zeitteilbereich in einem Bereitschaftszustand ist, der Prozessor bei der Ablaufplanung die Ausführungszeit in dem Zeitteilbereich an die Aufgabe zuweist, und
bei der Ausführungsreservierung der ausführungsreservierten Aufgabe der Prozessor die Unterbrechungsverarbeitungsaufgabe in einen Bereitschaftszustand bringt, um die Ausführung der Unterbrechungsverarbeitungsaufgabe als die ausführungsreservierte Aufgabe zu reservieren.

6. Sicherheitssteuerungsvorrichtung, mit den Schritten:
Reservieren einer Ausführung einer Unterbrechungsverarbeitungsaufgabe (30) als eine ausführungsreservierte Aufgabe bei Erzeugung einer Unterbrechung von einem Steuerungsobjekt zum Ausführen einer Verarbeitung als Antwort auf die Unterbrechung; und
Planen von Aufgaben in Übereinstimmung mit einem Ablaufplanungsschema, bei dem eine vorbestimmte Periodenzeit unterteilt wird in einen sicherheitsbezogenen Zeitteilbereich, bei dem eine Ausführungszeit eines Prozessors (10) an eine sicherheitsbezogene Aufgabe (24/28) zum Ausführen einer auf die Wahrung der Funktionssicherheit eines Steuerungsobjekts bezogenen Verarbeitung zugewiesen wird, einen nicht sicherheitsbezogenen Zeitteilbereich, bei dem die Ausführungszeit an eine nicht sicherheitsbezogene Aufgabe (26) zur Ausführung einer auf die Steuerung des Steuerungsobjekts bezogenen anderen Verarbeitung zugewiesen wird und einen reservierten Ausführungszeitteilbereich, bei dem die Ausführungszeit an eine ausführungsreservierte Aufgabe zugewiesen wird, die zur Ausführung reserviert ist,
wobei, falls die Ausführung der Aufgaben, die an einen gegenwärtig aktiven Zeitteilbereich vor dem reservierten Ausführungszeitteilbereich zugewiesen werden, vor Ablauf der Zeitspanne des gegenwärtig aktiven Zeitteilbereiches beendet wird, bei dem Schritt der Ablaufplanung die Ausführungszeit in dem gegenwärtig aktiven Zeitteilbereich anstelle der Ausführungszeit in dem reservierten Ausführungszeitteilbereich an eine der ausführungsreservierten Aufgaben zugewiesen wird.

## Revendications

1. Contrôleur de sécurité (1, 2) comprenant :
un processeur (10) ;
un programme système (100) pour contrôler l'allocation d'un temps d'exécution du processeur à une tâche liée à la sécurité (24/28) pour exécuter un traitement lié au fait de garantir la sécurité fonctionnelle d'une cible de contrôle, une tâche non liée à la sécurité (26) pour exécuter un autre traitement lié au contrôle de la cible de contrôle, et une tâche de traitement d'interruption (30) pour exécuter un traitement en réponse à une interruption en provenance de la cible de contrôle ; et
un gestionnaire d'interruption (31) exécuté en réponse à l'interruption en provenance de la cible de contrôle, dans lequel
le processeur exécute le programme système pour ordonnancer les tâches conformément à un modèle d'ordonnancement dans lequel un temps de cycle prédéterminé est divisé en une partition de temps liée à la sécurité dans laquelle le temps d'exécution est alloué à la tâche liée à la sécurité, une partition de temps non liée à la sécurité dans laquelle le temps d'exécution est alloué à la tâche non liée à la sécurité, et une partition de temps d'exécution de réservation dans laquelle le temps d'exécution est alloué à une tâche réservée d'exécution qui est réservée pour être exécutée,
lors de la génération d'une interruption en provenance de la cible de contrôle, le processeur exécute le gestionnaire d'interruption pour réserver l'exécution de la tâche de traitement d'interruption pour exécuter un traitement en réponse à l'interruption, comme la tâche réservée d'exécution, et
dans l'ordonnancement, lors de l'exécution des tâches allouées à une partition de temps actuellement active avant que la partition de temps d'exécution de réservation soit finie avant que la période de la partition de temps actuellement active n'ait expiré, le processeur alloue le temps d'exécution dans la partition de temps actuellement active à l'une quelconque des tâches réservées d'exécution, à la place du temps d'exécution dans la partition d'exécution de réservation.

2. Contrôleur de sécurité selon la revendication 1, dans lequel dans l'ordonnancement, lorsque l'exécution de la tâche réservée d'exécution n'est pas finie avant que la période de la partition de temps d'exécution de réservation n'ait expiré, dans un cas où il y a une période supplémentaire dans une période d'une prochaine partition de temps subséquente à la partition de temps d'exécution de réservation, à l'exclusion d'une période nécessaire pour l'exécution d'une tâche à laquelle le temps d'exécution est alloué dans la prochaine partition de temps, le processeur prolonge la période de la partition de temps d'exécution de réservation à l'intérieur de la plage de la période supplémentaire.

3. Contrôleur de sécurité selon la revendication 1 ou 2, comprenant en outre une unité de stockage qui stocke des informations de correspondance corrélant un facteur d'interruption pour l'interruption en provenance de la cible de contrôle avec la tâche de traitement d'interruption pour exécuter un traitement en réponse à l'interruption correspondant au facteur d'interruption,
dans lequel dans l'ordonnancement, le processeur réserve l'exécution de la tâche de traitement d'interruption correspondant au facteur d'interruption pour l'interruption en provenance de la cible de contrôle, comme la tâche réservée d'exécution, sur la base des informations de correspondance stockées dans l'unité de stockage.

4. Contrôleur de sécurité selon l'une quelconque des revendications 1 à 3, dans lequel
la tâche de traitement d'interruption a une priorité prédéterminée, et
le processeur alloue préférentiellement, dans l'ordonnancement, le temps d'exécution dans la partition de temps précédente à la tâche réservée d'exécution, à la place du temps d'exécution dans la partition d'exécution de réservation, la tâche réservée d'exécution étant une tâche de traitement d'interruption ayant une priorité plus élevée.

5. Contrôleur de sécurité selon l'une quelconque des revendications 1 à 4, dans lequel
dans l'ordonnancement, lorsque la tâche à laquelle le temps d'exécution est alloué dans la partition de temps est dans un état prêt, le processeur alloue le temps d'exécution de la tâche dans la partition de temps, et
dans la réservation d'exécution de la tâche réservée d'exécution, le processeur amène la tâche de traitement d'interruption dans un état prêt pour réserver l'exécution de la tâche de traitement d'interruption comme la tâche réservée d'exécution.

6. Procédé de contrôle de sécurité comprenant les étapes consistant à :
réserver, lors de la génération d'une interruption en provenance d'une cible de contrôle, l'exécution d'une tâche de traitement d'interruption (30) pour exécuter un traitement en réponse à l'interruption, comme une tâche réservée d'exécution ; et
ordonnancer des tâches conformément à un modèle d'ordonnancement dans lequel un temps de cycle prédéterminé est divisé en une partition de temps liée à la sécurité dans laquelle un temps d'exécution d'un processeur (10) est alloué à une tâche liée à la sécurité (24/28) pour exécuter un traitement lié au fait de garantir la sécurité fonctionnelle de la cible de contrôle, une partition de temps non liée à la sécurité dans laquelle le temps d'exécution est alloué à une tâche non liée à la sécurité (26) pour exécuter un autre traitement lié au contrôle de la cible de contrôle, et une partition de temps d'exécution de réservation dans laquelle le temps d'exécution est alloué à une tâche réservée d'exécution qui est réservée pour être exécutée,
dans lequel à l'étape de l'ordonnancement, lors de l'exécution des tâches allouées à une partition de temps actuellement active avant que la partition de temps d'exécution de réservation soit finie avant que la période de la partition de temps actuellement active n'ait expiré, le temps d'exécution dans la partition de temps actuellement active est alloué à l'une quelconque des tâches réservées d'exécution, à la place du temps d'exécution dans la partition d'exécution de réservation.
